(19) Europäisches Patentamt
European Patent Office
Office européen des brevets

(11) **EP 3 552 293 B1**

(12) **FASCICULE DE BREVET EUROPEEN**

(45) Date de publication et mention
de la délivrance du brevet:
**02.09.2020 Bulletin 2020/36**

(51) Int Cl.:
***H02J 3/38*** *(2006.01)*    ***H02J 3/46*** *(2006.01)*
***H02J 3/04*** *(2006.01)*

(21) Numéro de dépôt: **17811499.7**

(22) Date de dépôt: **24.11.2017**

(86) Numéro de dépôt international:
**PCT/EP2017/080320**

(87) Numéro de publication internationale:
**WO 2018/108481 (21.06.2018 Gazette 2018/25)**

(54) **COMMANDE EN PUISSANCE D'ONDULEURS D'UNE INSTALLATION PHOTOVOLTAÏQUE POUR LA PARTICIPATION AU RÉGLAGE EN FRÉQUENCE DU RÉSEAU DE DISTRIBUTION ÉLECTRIQUE**

LEISTUNGSSTEUERUNG VON WECHSELRICHTERN EINER FOTOVOLTAIKANLAGE ZUR TEILNAHME AN DER FREQUENZREGULATION DES ELEKTRISCHEN VERSORGUNGSNETZES

POWER CONTROL OF INVERTERS OF A PHOTOVOLTAIC FACILITY FOR PARTICIPATING IN FREQUENCY REGULATION OF THE ELECTRICAL DISTRIBUTION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2016 FR 1662323**

(43) Date de publication de la demande:
**16.10.2019 Bulletin 2019/42**

(73) Titulaire: **Electricité de France**
**75008 Paris (FR)**

(72) Inventeurs:
• **ROSSÉ, Antoine**
**91120 Palaiseau (FR)**
• **DELILLE, Gauthier**
**91120 Palaiseau (FR)**

(74) Mandataire: **Plasseraud IP**
**66, rue de la Chaussée d'Antin**
**75440 Paris Cedex 09 (FR)**

(56) Documents cités:
EP-A1- 2 490 312      WO-A1-2009/060273
WO-A1-2015/123549     US-A1- 2011 221 276

## Description

La présente invention concerne la gestion d'une installation photovoltaïque, de production d'électricité, comportant une pluralité d'onduleurs assurant le raccordement entre des panneaux photovoltaïques de l'installation et un réseau de distribution d'électricité.

Elle concerne notamment un procédé permettant à de telles installations de participer à la régulation de la fréquence du réseau, sans recours à un moyen de stockage d'énergie électrique, et sans modification du contrôle interne des onduleurs actuellement disponibles dans le commerce. Actuellement, en France au moins, les services nécessaires au réglage de la fréquence (fréquence nominale de 50 Hz en France) sont réalisés essentiellement par les producteurs conventionnels (en charge de la production telle qu'issue de l'hydraulique, du nucléaire, etc.). Les producteurs d'énergies de type communément appelé « énergies renouvelables » (éolien, photovoltaïque, etc.) en sont dispensés.

Ces services de réglage de fréquence ont pour but d'aider à stabiliser la fréquence du réseau autour d'une fréquence nominale (50 Hz en France). Pour ce faire, il est demandé à certains producteurs (notamment les producteurs conventionnels en France) :

- d'augmenter la puissance en cas de constat de sous-fréquence du réseau (symptomatique d'un manque de production ou d'une surconsommation dans le système),
- de diminuer la puissance en cas de constat de de sur-fréquence (symptomatique d'un excès de production ou d'un manque de consommation).

Un producteur conventionnel peut y procéder en fixant le point de consigne à fréquence nominale de son installation en-dessous de la puissance maximale de celle-ci. Ainsi par exemple, si la fréquence est en-dessous de sa valeur nominale de 50 Hz, par exemple 49,8 Hz, alors il est souhaité que l'installation produise davantage d'énergie électrique (plus précisément de puissance active) pour compenser le manque de production et pour faire en sorte que la fréquence du réseau revienne à sa valeur nominale de 50 Hz. Inversement, il peut être demandé aux producteurs de diminuer provisoirement leur production en cas de constat d'une sur-fréquence sur le réseau (fréquence supérieure à la fréquence nominale, par exemple 50,2 Hz au lieu de 50 Hz en France, symptomatique d'une surproduction d'énergie électrique dans le système).

En outre, le soutien dynamique à la fréquence, par une libération très rapide de la réserve, permet d'améliorer la qualité de fourniture dans les réseaux sensibles, comme les systèmes insulaires, en intervenant très rapidement suite à une perturbation.

Aujourd'hui, en France au moins, les producteurs d'énergies de type « énergies renouvelables » (éolien, photovoltaïque, etc.) sont dispensés de participer au réglage de fréquence.

Ainsi, les installations photovoltaïques sont habituellement pilotées pour que les panneaux photovoltaïques extraient à chaque instant le maximum de puissance solaire disponible. Ce pilotage se fait par le contrôle interne de chaque onduleur, avec des algorithmes qui permettent de trouver le point de fonctionnement optimal du panneau solaire (courant, tension) afin d'extraire un maximum de puissance. Le type d'algorithme habituellement utilisé pour réaliser ce pilotage est appelé « Maximum Power Point Tracking » (« MPPT » ci-après) et consiste en la recherche du maximum de puissance fournie par chaque panneau, en fonction de la tension appliquée à ses bornes. Le point de fonctionnement associé est appelé « Maximum Power Point » (« MPP » ci-après).

Cependant, avec le développement massif des énergies renouvelables sur les réseaux électriques, il est de plus en plus souvent demandé aux nouvelles installations (y compris celles de type à « énergies renouvelables ») de participer au soutien dynamique et/ou au réglage de la fréquence.

Dans le cas d'une sur-fréquence, des solutions existent pour diminuer temporairement la puissance produite par des producteurs d'énergie renouvelable. Ces solutions permettent uniquement de participer à la réserve « à la baisse » (c'est-à-dire de diminuer la production quand la fréquence augmente). Dans le cas de producteurs exploitant l'énergie éolienne par exemple, il est possible de piloter la vitesse mécanique des turbines ou l'angle de calage des pales des turbines éoliennes afin de diminuer la puissance produite.

Dans le cas des installations photovoltaïques, on peut diminuer la puissance produite en s'écartant de la tension correspondant au point de fonctionnement MPP des panneaux l'alimentant. Une telle réalisation est proposée dans le document FR 15 59128 au nom de la demanderesse. Cependant, cette stratégie implique le contrôle interne de l'onduleur relié à un panneau ou un groupe de panneaux photovoltaïques. Or, l'onduleur est généralement verrouillé par le constructeur pour qu'il ne puisse être utilisé que comme une « boite noire » par l'exploitant.

En revanche, de nombreux onduleurs commerciaux restent pilotables en puissance, c'est-à-dire que l'exploitant peut envoyer une consigne de puissance active $P_{cons}$ à l'onduleur, et cette puissance sera produite en sortie de l'onduleur (avec une certaine précision et un certain retard), si toutefois cette puissance reste inférieure à celle $P_{MPP}$ correspondant à son MPP. Si la consigne de puissance $P_{cons}$ est supérieure à $P_{MPP}$ de l'onduleur, alors la puissance produite sera limitée à la puissance maximale disponible, c'est-à-dire la puissance $P_{MPP}$ (appelée le « MPP » par la suite). Concrètement, un exploitant d'un onduleur photovoltaïque peut diminuer la puissance produite en envoyant une consigne de puissance inférieure au MPP de l'onduleur. Ainsi, cette puissance $P_{cons}$ peut être considérée comme une consigne de limitation de puissance active.

Afin de pouvoir soutenir le réseau en cas de baisse de fréquence, il convient de maintenir une réserve « à la hausse », et ainsi conserver une marge entre la puissance disponible et la puissance réellement injectée au réseau. La variabilité des ressources primaires (vent, soleil, etc.) rend particulièrement difficile cette constitution de réserve.

La solution technique souvent retenue pour répondre à cette difficulté et contribuer au soutien dynamique et/ou au réglage de fréquence consiste à ajouter un dispositif de stockage au sein de l'installation. Néanmoins, cette solution présente comme inconvénient majeur un investissement supplémentaire à réaliser dans un tel dispositif de stockage.

On identifie ici le document de l'Art antérieur EP 2 490 312 A1, qui décrit, avec le vocabulaire des revendications, un procédé, mis en œuvre par des moyens informatiques, de contrôle de la puissance électrique produite par une installation de panneaux photovoltaïques pour constituer une réserve de puissance, l'installation comportant un ensemble de N onduleurs pour piloter la puissance produite par lesdits panneaux photovoltaïques, le procédé, mené sur des onduleurs parmi l'ensemble des N onduleurs, comprenant :

- Emettre des consignes respectives à un nombre k d'onduleurs parmi l'ensemble des N onduleurs, pour produire chacun une puissance maximale,
- Estimer, une puissance maximale totale susceptible d'être produite par l'ensemble des N onduleurs de l'installation,
- Obtenir une information relative à une quantité de puissance de réserve à constituer, et déterminer une puissance globale à produire de sorte que l'écart entre ladite puissance globale et ladite puissance maximale totale corresponde à ladite quantité de puissance de réserve à constituer.

La présente invention vient améliorer cette situation.

A cet effet, il est proposé une modification intrinsèque du fonctionnement des onduleurs photovoltaïques et donc une modification des modes habituels de leur pilotage.

Selon un premier aspect, l'invention propose un procédé, mis en œuvre par des moyens informatiques, de contrôle de la puissance électrique produite par une installation de panneaux photovoltaïques pour constituer une réserve de puissance, l'installation comportant un ensemble de N onduleurs pour piloter la puissance produite par lesdits panneaux photovoltaïques, le procédé, mené itérativement sur des onduleurs successifs parmi l'ensemble des N onduleurs, comprenant :

- Emettre des consignes respectives à un nombre k d'onduleurs parmi l'ensemble des N onduleurs, pour produire chacun une puissance maximale, le nombre k étant inférieur au nombre N et les k onduleurs étant déterminés pour une itération donnée du procédé,
- Obtenir des k onduleurs des mesures de puissances maximales produites respectivement par les k onduleurs et enregistrer en mémoire lesdites mesures pour les k onduleurs, ladite mémoire stockant en outre N-k mesures obtenues de N-k onduleurs complémentaires lors d'au moins une itération précédente du procédé,
- Estimer, par lecture du contenu de la mémoire, une puissance maximale totale susceptible d'être produite par l'ensemble des N onduleurs de l'installation,
- Obtenir une information relative à une quantité de puissance de réserve à constituer, et déterminer une puissance globale à produire de sorte que l'écart entre ladite puissance globale et ladite puissance maximale totale corresponde à ladite quantité de puissance de réserve à constituer,
- Maintenir les consignes des k onduleurs de produire une puissance maximale, et émettre des consignes respectivement à N-k onduleurs complémentaires pour produire une puissance cible

inférieure à une puissance maximale, afin que la somme des N-k puissances cibles et des k puissances maximales corresponde à ladite puissance globale à produire,

- Choisir parmi les N onduleurs un ou plusieurs onduleurs suivants pour remplacer les k onduleurs dans une itération suivante du procédé.

Ainsi, la présente invention vient utiliser simplement la faculté actuelle des onduleurs connus à déterminer leur point de fonctionnement permettant de délivrer une puissance maximale, ce qui permet ainsi de déterminer la réserve en puissance possible de l'installation, par déterminations cycliques des puissances maximales de tous les onduleurs. Certains de ces onduleurs (k onduleurs) sont alors pilotés afin d'atteindre cette puissance maximale alors que les autres onduleurs (N-k onduleurs) peuvent participer à la constitution de réserve, et ce successivement (par exemple par permutation circulaire). L'invention ne nécessite donc qu'un dispositif informatique communiquant avec les onduleurs pour piloter leur fonctionnement selon un tel procédé.

Dans une réalisation avantageuse, une temporisation est appliquée entre l'émission des consignes aux k onduleurs et l'obtention des mesures de puissances maximales des k onduleurs, afin de tenir compte d'une latence de recherche par chaque onduleur du maximum de puissance pouvant être produite. Cette recherche peut être typiquement une routine préexistante (dite « MPPT ») et décrite plus en détails plus loin.

Dans une réalisation, chaque consigne aux k onduleurs d'atteindre la puissance maximale comporte une consigne de rampe temporelle à respecter, pour une augmentation progressive de la puissance produite par chacun des k onduleurs. Une telle réalisation permet d'éviter des pics de puissance produite, au-delà d'une consigne de puissance globale à respecter, comme on le verra plus loin.

Dans une réalisation, avant l'émission d'une consigne de puissance cible à un onduleur donné, il est vérifié si ledit onduleur donné a reçu une consigne de production de puissance maximale à l'itération précédente du procédé, et le cas échéant la consigne de puissance cible à cet onduleur donné comporte une consigne de rampe temporelle à respecter pour une diminution progressive de la puissance produite par cet onduleur donné jusqu'à la puissance cible. Là encore, une telle réalisation permet d'éviter des baisses non voulues de production de puissance, au-deçà d'une consigne de puissance globale à respecter.

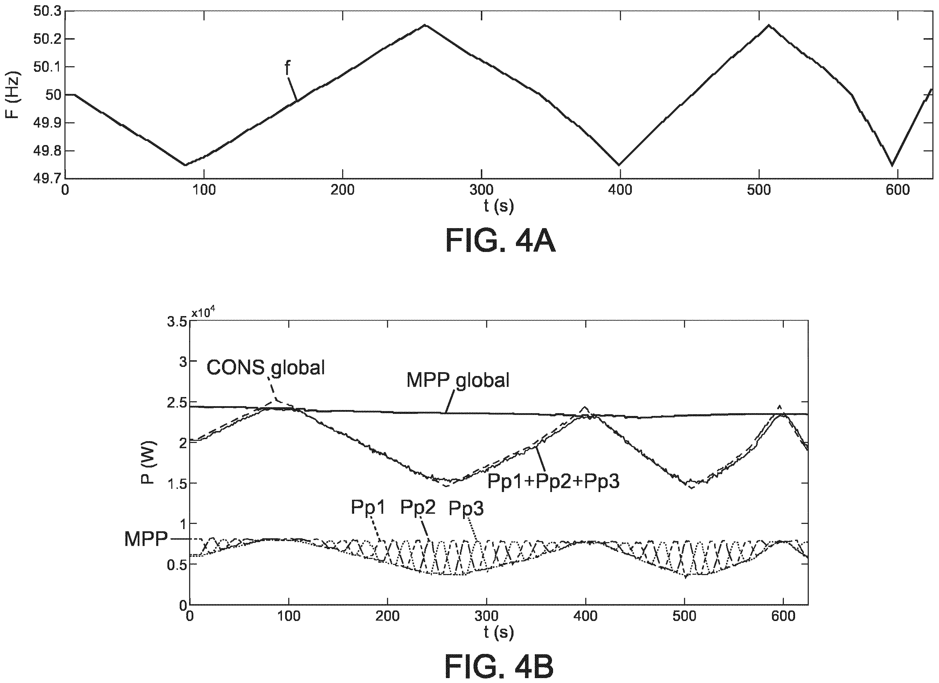

Dans cette réalisation, combinée à la précédente, les rampes d'augmentation et de diminution sont choisies avantageusement pour conserver sur l'ensemble des N onduleurs une puissance globale produite correspondant à ladite puissance globale à produire. Cette précaution permet de lisser la puissance globale produite en la rendant conforme à la consigne globale calculée, comme on le verra en particulier sur la figure 4B commentée plus loin.

Dans une réalisation, chaque consigne de puissance cible est déterminée pour respecter un même écart entre la puissance cible et la puissance maximale pour tous les N-k onduleurs complémentaires. Une telle réalisation permet de répartir la réserve à constituer sur les N-k onduleurs qui ne sont pas à leur maximum de puissance produite.

Dans une réalisation, la réserve précitée de puissance de l'installation est constituée en vue de libérer toute ou partie de ladite réserve en fonction d'une déviation de fréquence par rapport à une fréquence nominale d'un réseau de distribution d'électricité auquel les onduleurs sont connectés.

En particulier, l'information précitée relative à une quantité de puissance de réserve à constituer peut être une valeur directement mesurée de la fréquence du réseau de distribution, en fonction de laquelle est calculée ladite quantité de puissance de réserve à constituer.

En variante, cette information relative à une quantité de puissance de réserve à constituer peut être une consigne de constitution de réserve reçue d'une entité gestionnaire du réseau de distribution.

Dans une réalisation, dans une itération suivante du procédé, on choisit, parmi les N onduleurs, k onduleurs suivants pour remplacer k onduleurs précédents d'une itération précédente (en respectant donc le même nombre k d'une itération à la suivante). Typiquement, on peut prévoir une permutation cyclique de k onduleurs à chaque itération, parmi les N onduleurs.

La présente invention vise aussi un programme informatique (et son support mémoire) comportant des instructions pour la mise en œuvre du procédé ci-avant, lorsque ce programme est exécuté par un processeur. Les figures 3 et 5 sont des ordinogrammes possibles de l'algorithme général d'un tel programme. Les figures 6 et 7 sont des ordinogrammes possibles de sous-routines particulières de cet algorithme général.

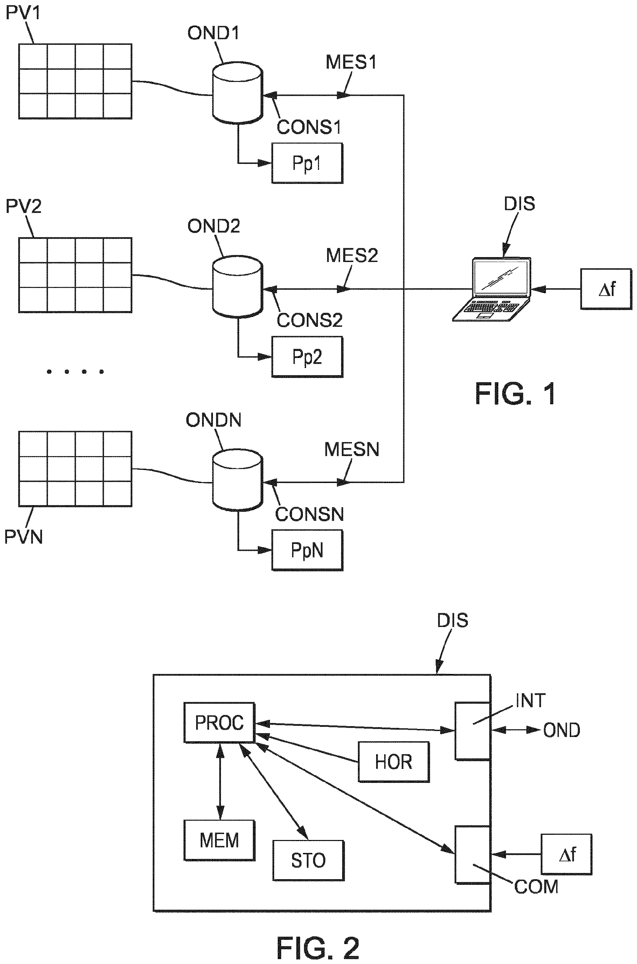

La présente invention vise aussi un dispositif informatique comportant un circuit de traitement comprenant un processeur pour la mise en œuvre du procédé ci-avant. Comme illustré sur la figure 2 commenté en détails plus loin, le circuit de traitement inclut en outre au moins :

- une interface de communication (INT) avec les onduleurs, et

- une mémoire (STO) d'enregistrement des mesures de puissances maximales produites successivement par les onduleurs.

Ainsi, le procédé permet la gestion des consignes de puissance active de chaque onduleur du système, en fonction :

- des mesures de puissance active de chaque onduleur, pratiquement en temps réel, et

- d'une mesure en temps réel de fréquence du réseau de distribution au point de raccordement (et/ou d'un signal de contrôle en provenance d'une entité gestionnaire de réseau).

Ce procédé permet à des installations photovoltaïques préexistantes d'être adaptées, sans remplacement des onduleurs actuels ni prévision de nouveaux capteurs, pour participer au réglage de la fréquence.

D'autres avantages et caractéristiques de l'invention apparaitront à la lecture de la description détaillée ci-après d'exemples de réalisation de l'invention, et à l'examen des dessins annexés sur lesquels :

- la figure 1 illustre une installation à panneaux photovoltaïques pilotés par des onduleurs, communiquant avec un dispositif au sens de l'invention,

- la figure 2 illustre schématiquement un dispositif au sens de l'invention,

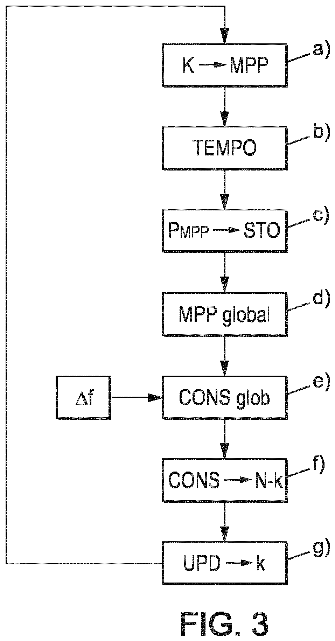

- la figure 3 illustre des étapes principales d'un procédé au sens de l'invention, dans un exemple de réalisation,

- la figure 4A illustre une variation de fréquence du réseau de distribution d'électricité, en entrée de paramètre pour un dispositif de gestion d'une installation à trois onduleurs dont les puissances délivrées sont illustrées sur la figure 4B (bas de la figure 4B pour les puissances individuelles délivrées),

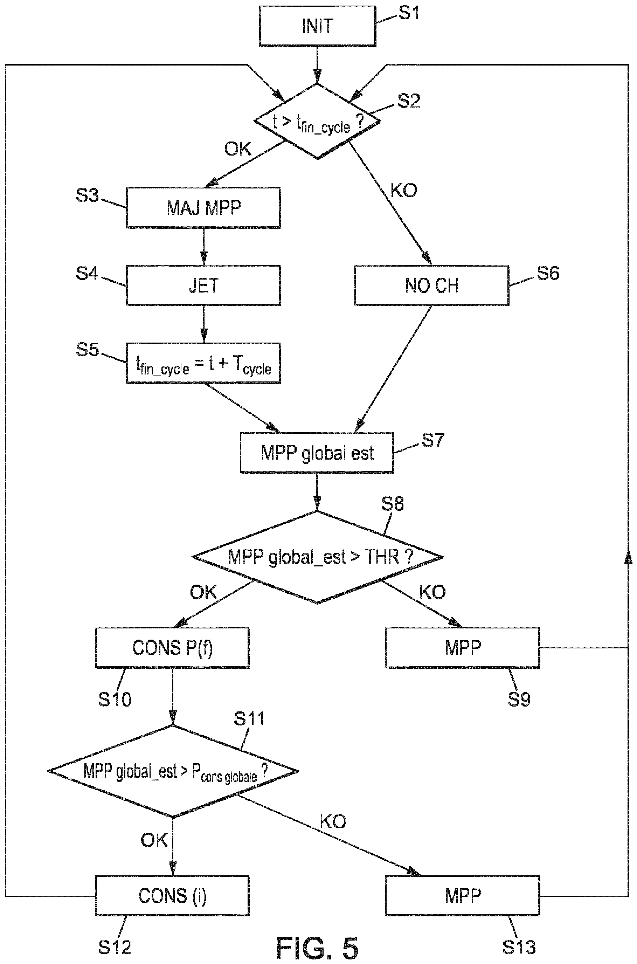

- la figure 5 illustre un ordinogramme détaillé d'un exemple de réalisation d'un procédé selon l'invention,

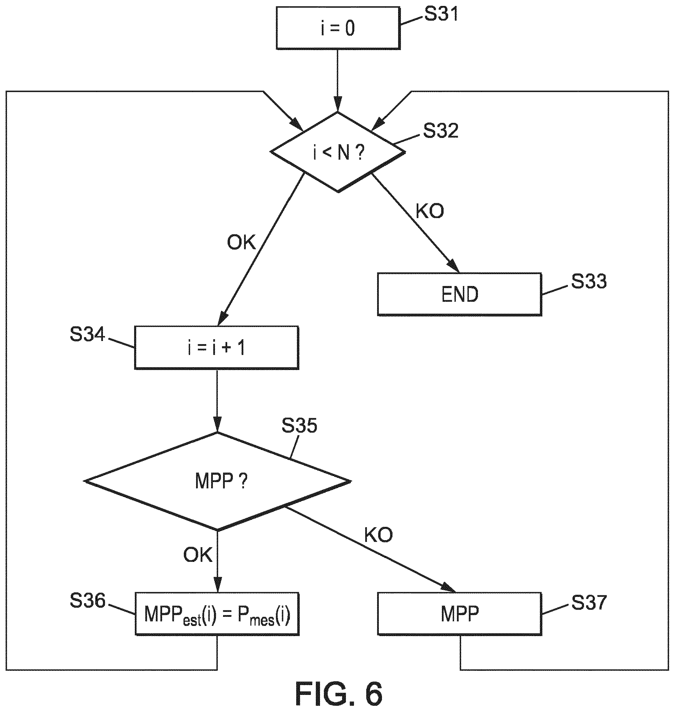

- la figure 6 illustre un détail de réalisation de l'étape S3 de la figure 5,

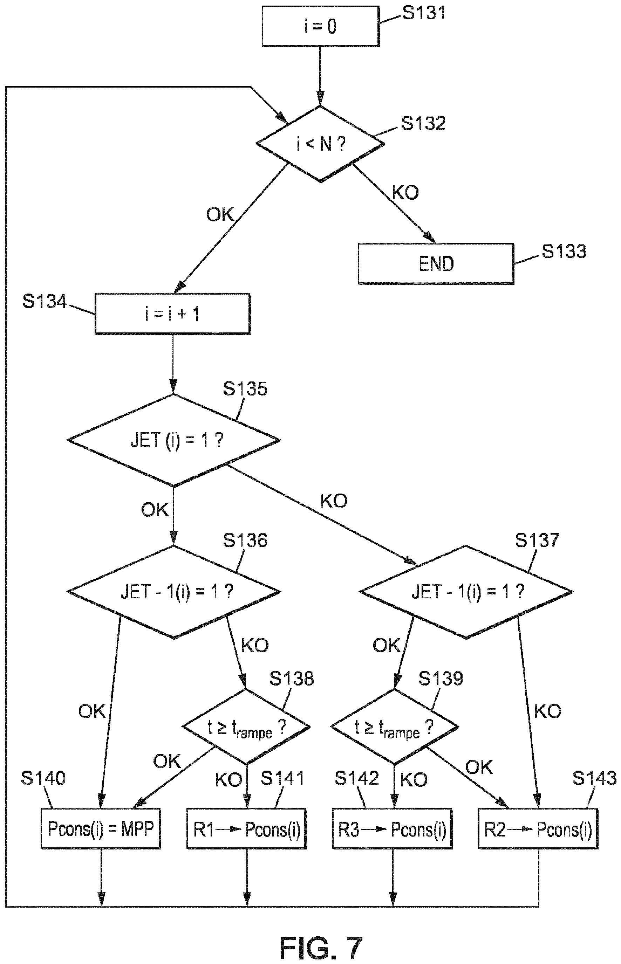

- la figure 7 illustre un détail de réalisation de l'étape S12 de la figure 5.

La présente invention concerne la gestion d'une installation de panneaux photovoltaïques telle qu'illustrée sur la figure 1. L'installation comporte plusieurs panneaux photovoltaïques reliés par groupes PV1, PV2, ..., PVN à des onduleurs respectifs OND1, OND2, ..., ONDN. Les panneaux produisent de l'électricité par effet photovoltaïque et chaque onduleur auquel ils sont reliés peut être piloté en puissance produite Pp1, Pp2, PpN en sortie de chaque onduleur, par un dispositif informatique (type ordinateur) DIS. A cet effet, le dispositif DIS peut émettre une consigne CONS1, CONS2, ..., CONSN, pour chaque onduleur OND1, OND2, ..., ONDN. En particulier, cette consigne pour un onduleur peut être d'atteindre un maximum de puissance produite $P_{MPP}$. Une fois cette valeur de puissance $P_{MPP}$ atteinte par un onduleur, ce dernier transmet habituellement au dispositif DIS la puissance maximale atteinte $P_{MPP}$. Ainsi, le dispositif DIS peut connaitre à tout moment une mesure de cette puissance maximale atteignable $P_{MPP}$. Cette valeur $P_{MPP}$ est variable et dépend bien entendu des conditions d'ensoleillement (elle est d'autant élevée que l'ensoleillement est important). Ainsi, la valeur $P_{MPP}$ que transmet chaque onduleur au dispositif DIS représente une mesure (flèches MES1, MES2, ..., MESN) à un instant courant de la puissance maximale pouvant être atteinte et que peut délivrer cet onduleur (et dépendant ainsi du degré d'ensoleillement à cet instant courant).

Plus précisément, les onduleurs sont habituellement pilotés pour que leurs panneaux photovoltaïques extraient à chaque instant le maximum de la puissance solaire disponible. Le type d'algorithme de commande habituellement utilisé pour réaliser ce pilotage est appelée « Maximum Power Point Tracking » (« MPPT ») et consiste en la recherche du maximum de puissance fournie par chaque panneau, en fonction de la tension appliquée à ses bornes. Le point de fonctionnement associé est appelé « Maximum Power Point » (« MPP »). On peut également diminuer (« brider ») la puissance produite par un onduleur en s'écartant de la tension correspondant au point de fonctionnement MPP des panneaux l'alimentant. Dans ce cas, la puissance produite Pp est inférieure à la puissance $P_{MPP}$. En pratique, les algorithmes de contrôle du point de fonctionnement des panneaux photovoltaïques sont intégrés dans une unité de contrôle-commande des onduleurs disponibles dans le commerce, et verrouillés par les constructeurs. Ainsi, pour un utilisateur, l'onduleur se comporte comme une « boite noire », avec un choix restreint de modes de pilotage externe. Néanmoins, la plupart des onduleurs proposent au moins deux modes de pilotage :

- le pilotage au MPP : l'onduleur fonctionne en mode MPP pour délivrer la puissance maximum $P_{MPP}$ à un instant courant et utilise un algorithme de type MPPT pour extraire le maximum de puissance à tout instant,

- le pilotage par consigne de puissance Pcons : l'onduleur reçoit une consigne de puissance, par exemple venant d'un appareil externe, et essaie de réaliser cette consigne. Si la puissance solaire disponible est suffisante, l'onduleur cherche alors un point de fonctionnement du panneau photovoltaïque permettant de réaliser la consigne de puissance demandée (par exemple en modifiant la tension aux bornes du panneau par rapport à la tension donnant la puissance maximale $P_{MPP}$). On peut considérer dans ce cas que l'onduleur est « bridé » car il n'exploite pas le panneau au maximum et n'extraie donc pas le maximum de puissance disponible. Cependant il fournit bien une puissance correspondant à la consigne qui lui a été envoyé. En revanche, si la consigne de puissance envoyée à l'onduleur est supérieure à la puissance solaire disponible, l'onduleur cherche à fonctionner au maximum de puissance disponible, c'est-à-dire en pilotage « MPP » tant que cette puissance maximum disponible reste inférieure à la consigne.

On considère, dans le cadre de la présente invention, que les onduleurs peuvent chacun recevoir :

- une consigne de puissance permettant de brider la puissance du panneau si la puissance disponible le permet, et

- un ordre de fonctionner au MPP, et ainsi trouver le point de puissance maximum grâce aux algorithmes de type MPPT implémentés dans le contrôleur interne de l'onduleur.

L'invention propose alors de profiter de ces modes possibles de fonctionnement pour constituer une réserve de puissance électrique générée par les panneaux et contribuer ainsi à l'équilibre de la fréquence du réseau de distribution électrique (comme le but décrit dans le document FR 15 59128). Il s'agit par exemple de corriger un écart de fréquence $\Delta f$ par rapport à une fréquence nominale (en France de 50 Hz). En principe, plus la fréquence est haute ($\Delta f > 0$) et plus il convient de réduire la puissance produite. Plus la fréquence est basse ($\Delta f < 0$) et plus il convient de libérer la réserve de puissance produite. Dans un cas extrême où $\Delta f < 0$, on peut piloter les onduleurs de manière à délivrer la puissance maximale $P_{MPP}$ de tous les onduleurs.

A cet effet, le dispositif obtient une valeur courante de la fréquence du réseau, ou un écart à sa valeur nominale $\Delta f$. Pour obtenir cette donnée, en référence à la figure 2, le dispositif DIS peut recevoir (ou alternativement mesurer directement) la valeur $\Delta f$ via une interface de communication COM. Le dispositif comporte en outre un processeur PROC et une mémoire permanente MEM. Cette mémoire MEM peut stocker typiquement des codes d'instructions du programme informatique au sens de l'invention. Ces codes d'instructions peuvent être lus par le processeur PROC pour exécuter le procédé selon l'invention (décrit en détails ci-après). Le dispositif peut comporter en outre une mémoire de travail STO pour stocker des données temporaires, notamment les puissances maximales $P_{MPP}$ que remontent les onduleurs au dispositif via l'interface de communication avec les onduleurs INT, qui peut servir par ailleurs à envoyer les consignes de puissance à produire aux onduleurs. Il convient de noter que les mémoires MEM et STO peuvent être une même unité mémoire du dispositif. En outre, notamment pour une étape optionnelle (mais avantageuse de temporisation) du procédé présenté ci-après, le dispositif peut comporter une horloge interne HOR.

On cherche en particulier à constituer la réserve de puissance sur l'installation photovoltaïque et d'en optimiser la constitution, de façon à limiter le productible perdu et à maximiser la disponibilité de la réserve. L'invention vise alors un procédé, mis en œuvre par des moyens informatiques (typiquement le dispositif DIS), de pilotage de production de puissance de panneaux photovoltaïques en envoyant des consignes de puissance active précisément calculées aux onduleurs individuels d'une installation (appelée « centrale » ci-après), afin d'avoir à chaque instant une estimation de la puissance maximale disponible de la centrale (appelée « MPP global » de la centrale) et de pouvoir réaliser une consigne globale de puissance, inférieure ou égale au MPP global. Ce procédé n'implique pas de modification des contrôleurs internes des onduleurs (algorithme décalant facticement le MPP par exemple, comme décrit dans le document FR 15 59128), qui peuvent être considérés comme des systèmes de type « boite noire » avec en entrée une consigne de puissance et en sortie une puissance réalisée et mesurée. Le procédé peut être compatible avec des installations existantes utilisant des onduleurs disponibles dans le commerce, à condition que les onduleurs puissent recevoir des consignes de puissance d'un dispositif externe (par exemple un automate, un ordinateur, etc.), et que leur temps de réponse à ces consignes soit suffisamment court (typiquement moins de 5 secondes).

Une forme de réalisation du procédé peut être décrite par les étapes illustrées sur la figure 3, mises en œuvre cycliquement pour une installation comportant un nombre total N d'onduleurs :

a) Envoyer un ordre à un nombre k d'onduleurs parmi l'ensemble des N onduleurs (k supérieur ou égal à 1 mais inférieur à N), pour produire leur maximum de puissance (consigne d'aller au MPP),

b) Appliquer une temporisation choisie (afin que la recherche du MPP par l'algorithme de recherche interne à ces onduleurs ait convergé vers le point MPP et que les puissances produites par ces onduleurs soient bien les puissances MPP respectives),

c) Mesurer les puissances produites par les k onduleurs au maximum de leur puissance et enregistrer ces valeurs (ces valeurs de puissance indiquent le MPP de ces onduleurs à cet instant et sont enregistrées dans une mémoire pour être utilisées comme estimations des MPP courantes de ces onduleurs si ces derniers sont bridés en puissance par la suite),

d) Calculer une estimation d'une puissance maximale globale (appelée MPP global) susceptible d'être produite par l'installation (en faisant la somme des estimations enregistrées de MPP de l'ensemble des N onduleurs individuels),

e) Eventuellement en parallèle des étapes a) à d), obtenir une donnée de la fréquence du réseau d'acheminement d'électricité et calculer une consigne globale de puissance pour libérer toute ou partie de la réserve de l'installation selon une déviation de fréquence par rapport à une fréquence nominale (notée ci-après $\Delta f$) (cette fréquence du réseau et donc sa déviation, peuvent être mesurées directement par l'installation, ou alternativement, reçues sous la forme d'un ordre de libération de toute ou partie de la réserve, par exemple dans un signal reçu par l'installation, et issu d'une entité de gestion du réseau par exemple),

f) Envoyer des consignes de puissance aux (N - k) onduleurs (onduleurs de l'installation qui ne sont pas à leur MPP), pour brider (quasi-instantanément) leur puissance, afin que la puissance totale de l'installation suive la consigne de puissance globale (inférieure ou égale au MPP global de l'installation) : ces onduleurs assurent ainsi l'ajustement de puissance active ou l'effort de réglage de l'installation à la fréquence du réseau, tandis que les k autres onduleurs sont à leur MPP,

g) Répéter les étapes précédentes en modifiant les onduleurs qui sont au MPP et ceux qui sont bridés (en choisissant k onduleurs suivants par exemple parmi les N onduleurs) : les onduleurs peuvent donc aller chacun à leur tour au MPP et mettre à jour la valeur estimée du MPP de chaque onduleur de façon cyclique ou selon des stratégies alternatives avancées, tout en maintenant la réserve sur le reste des onduleurs qui sont donc bridés en puissance.

L'étape f) peut être effectuée de différentes manières : les (N-k) onduleurs peuvent avoir tous la même consigne de puissance individuelle, ou alternativement avoir des consignes de puissance individuelles différentes d'un onduleur à l'autre, mais dans le même but de produire une puissance totale de l'installation respectant la consigne de puissance globale. Typiquement, certains onduleurs parmi les (N-k) onduleurs peuvent par exemple être à leur MPP, tandis que d'autres peuvent être en-dessous.

Ainsi, on constitue une réserve globale au niveau de la centrale en plaçant à chaque instant un nombre choisi N-k d'onduleurs à une puissance inférieure ou égale à leur MPP, en leur envoyant des consignes de puissance inférieures ou égales aux estimations de leurs MPP respectifs. Les estimations de MPP sont mises à jour de façon cyclique pour assurer ainsi une rotation entre les onduleurs qui sont au MPP et ceux qui assurent la fonction de constitution de réserve. Ainsi, une estimation du MPP global de la centrale peut être connue à chaque instant (en prenant toutes les valeurs de MPP mesurées et enregistrées les unes après les autres sur l'ensemble des N onduleurs). La puissance globale peut alors être pilotée pour assurer de la réserve et effectuer le réglage de la fréquence du réseau, et ce sans nécessiter de capteurs autres que les capteurs de puissance habituels des onduleurs (les onduleurs du commerce étant déjà équipés de ces capteurs). Il suffit ainsi d'un capteur de la fréquence du réseau au point de raccordement de la centrale, ou simplement d'un module de communication pour recevoir un signal de réglage externe (par exemple un signal en provenance d'une entité gestionnaire du réseau). Aucune modification des contrôleurs internes des onduleurs ni de connaissance *a priori* du comportement des panneaux n'est nécessaire.

A titre d'exemple illustratif, dans le cas simple d'une installation composée de trois onduleurs, chacun d'une puissance maximale de 10 kW, la puissance totale de la centrale avec un plein ensoleillement est donc de 30 kW. En participant à la contribution de régulation de fréquence du réseau, ce maximum n'est jamais atteint (sauf dans le cas d'un plein ensoleillement et où la fréquence est bien inférieure à 50Hz). Plutôt, on cherche dans cet exemple à maintenir une réserve de puissance fixe de 4 kW, que l'on pourrait libérer rapidement en cas d'une chute importante de la fréquence du réseau ou d'activation par la consigne du signal externe précité.

On considère qu'à un état initial, les estimations des MPP de chaque onduleur sont connues et égal à 6 kW pour chaque onduleur. L'estimation du MPP global de la centrale $MPP_{est\_total}$ est la somme des MPP estimés des trois onduleurs. On a donc $MPP_{est\_total}$ = 18 kW.

Lors de la première phase du cycle, l'onduleur OND1 est commandé pour atteindre son MPP. On attend à ce qu'il produise 6 kW, et on cherche à maintenir 4 kW de réserve à la hausse. Il faut donc produire au total 18 kW - 4 kW = 14 kW, c'est-à-dire qu'il faut placer les 4 kW de réserve sur les onduleurs OND2 et OND3. En répartissant la réserve de façon équitable, dans cet exemple, on place 2 kW de réserve sur chaque onduleur (OND2 et OND3), donc chacun reçoit une consigne $P_{cons}$ = 4 kW par exemple. D'autres solutions de répartition sont envisageables, par exemple pour optimiser les rendements des onduleurs. La puissance totale mesurée est de 14 kW, sachant que l'estimation du MPP global est de 18 kW. En effet, la puissance MPP de l'onduleur 1 n'a pas changé par rapport à son estimation. On a donc bien 4 kW de réserve en théorie, comme suit :

- OND1 : MPP = 6 kW et Pcons = MPP = MES1 = 6kW,

- OND2 : MPP = 6 kW, mais Pcons = 4 kW = MES2, et

- OND3 : MPP = 6 kW, mais Pcons = 4 kW = MES3,
  avec MES1+MES2+MES3 = $P_{totale}$ = 14kW, alors que MPPglobal = 18 kW, soit donc 4 kW de réserve pour cette centrale.

En passant à la deuxième phase, l'onduleur OND2 fonctionne maintenant au MPP (à la place de l'onduleur OND1), et on place maintenant la réserve sur les onduleurs OND1 et OND3. Dans l'exemple décrit, on constate un écart entre le MPP estimé et la puissance mesurée de l'onduleur OND2 : son MPP a changé et est devenu 6,5kW. On enregistre alors la nouvelle valeur du MPP de l'onduleur OND2 à la fin de cette phase pour mettre à jour le MPP global et corriger les consignes de la prochaine phase afin de maintenir les 4 kW de réserve.

A la fin de la deuxième phase, on a :

- OND1 : MPP= 6 kW et Pcons= 4kW,

- OND2 : MPP= 6,5 kW et Pcons= MPP= 6,5kW, et

- OND3 : MPP= 6 kW et Pcons= 4kW.

Ainsi, $P_{totale}$ = 14,5 kW et MPP global = 18,5 kW, et on a bien 4 kW de réserve pour cette centrale.

Lors de la troisième phase, l'onduleur OND3 passe au MPP. On constate que son MPP est inchangé.

On a donc à la fin de cette troisième phase :

- OND1 : MPP= 6 kW et Pcons= 4kW,

- OND2 : MPP= 6,5 kW, de sorte que Pcons peut être choisie à Pcons= 4,5kW, et

- OND3 : MPP= 6 kW et Pcons= 6kW.

On a ainsi $P_{totale}$ = 14,5 kW et MPP global = 18,5 kW, avec bien 4 kW de réserve toujours pour cette centrale.

On repasse alors à nouveau l'onduleur OND1 à son MPP pour redémarrer le cycle, et mettre à jour le MPP de l'onduleur OND1 au cas typiquement où il aurait évolué depuis sa dernière mesure.

On constate avec cet algorithme cyclique de mise au MPP des onduleurs successifs qu'il est possible de maintenir un volume de réserve sur la centrale tout en suivant les variations des MPP des onduleurs individuels et répartir une consigne globale sur l'ensemble des onduleurs. La précision de la réserve varie en cas de changements d'ensoleillement qui entrainent des changements de MPP. Il est donc préférable de balayer tous les onduleurs de façon cyclique et mettre à jour régulièrement tous les MPP. Dans la mesure où les variations sont lentes, la précision d'estimation des MPP est bonne et on peut garantir une réserve choisie avec une précision satisfaisante.

On se réfère aux figures 4A et 4B pour montrer un test du procédé dans des conditions réelles sur une installation composée de trois onduleurs (chacun de puissance maximum de 15 kW), pilotés en puissance par un ordinateur DIS (automate) qui envoie des consignes de puissances actives aux onduleurs en fonction des mesures de puissances reçues des onduleurs. Un profil de fréquence du réseau f, de synthèse, est utilisé (figure 4A) pour tester la réponse de l'installation (Pp1+Pp2+Pp3 correspondant à la somme des puissances produites par l'ensemble des trois onduleurs) à des variations de fréquence du réseau. La figure 4B valide le bon fonctionnement multi-onduleurs selon le procédé de l'invention.

L'analyse de cet essai illustre clairement que les onduleurs sont commandés successivement, un par un, au MPP afin de trouver leur point de puissance maximum et mettre à jour la valeur de MPP estimée et gardée en mémoire. Sur les courbes des mesures de puissances individuelles des onduleurs, on observe des rampes que suivent les onduleurs pour monter et descendre de leur MPP afin de rendre les transitions de puissance plus douces. Cette réalisation de variation « en rampe » est décrite en détail plus loin. Le bruit au niveau de la puissance globale est faible et la puissance globale suit la consigne globale avec très peu d'erreur à chaque instant. L'estimation du MPP est correcte, car aux instants où la fréquence est très basse (à t=400s puis juste avant 600s dans l'exemple illustré), toute la réserve est libérée (c'est-à-dire que la centrale est mise au MPP), et la puissance totale obtenue (Pp1+Pp2+Pp3) est bien celle prévue et correspondant à la consigne globale CONSglobal, avec très peu d'erreur sauf au maximum de puissance demandée puisqu'elle ne peut pas dépasser la somme des $P_{MPP}$ des trois onduleurs.

On constate le bon fonctionnement du réglage de fréquence : la puissance globale répond bien aux variations de la fréquence. Lorsque la fréquence augmente, la puissance baisse, et inversement quand la fréquence baisse, la puissance de la centrale augmente pour soutenir le réseau. La courbe (Pp1+Pp2+Pp3) représentant la variation de la puissance globale produite en fonction de ces variations de fréquence du réseau suit bien la consigne et montre ainsi qu'il est bien possible d'effectuer un réglage de qualité.

On décrit plus précisément ci-après des formes de réalisation spécifiques, à titre d'exemples de réalisation possible.

Le contrôle des puissances des onduleurs est basé sur le principe du procédé cyclique présenté précédemment en référence à la figure 3. Le dispositif de contrôle DIS garde en mémoire une table ou un vecteur de « Jetons », qui indique à chaque instant quels onduleurs doivent aller au MPP et lesquels doivent assurer la réserve. Par exemple, si le premier élément du vecteur Jeton(1) = 1, alors l'onduleur OND1 est commandé au MPP. Si Jeton(1) = 0, alors l'onduleur OND1 est bridé en puissance et reçoit une consigne de puissance afin de constituer une partie de la réserve de la centrale. A la fin de chaque phase du cycle, les Jetons sont « redistribués » afin de changer la répartition entre les onduleurs au MPP et ceux qui assurent la réserve. Ceux qui assurent la réserve reçoivent une consigne calculée précisément pour que la consigne globale soit réalisée (fonction de la réserve souhaitée, de la puissance maximale disponible, et de la fréquence du réseau). Ces calculs sont détaillés plus loin. En outre, comme introduit ci-dessus, une fonctionnalité supplémentaire, appelée « lissage des transitions par rampe de consigne » est ajoutée pour lisser les transitions de puissance entre le mode « réserve » et le mode « MPP » de chaque onduleur, tout en assurant la réalisation de la consigne globale à tout instant. Cette fonctionnalité est également détaillée par la suite.

De manière générale, on peut noter trois cas dans lesquels tous les onduleurs sont forcés au MPP :

- le premier cas concerne la phase d'initialisation pour récupérer tous les MPP de tous les onduleurs,

- le deuxième cas se présente lorsque le MPP global estimé est inférieur à un seuil prédéfini par l'opérateur (insuffisance de puissance disponible pour fournir la réserve), et

- le troisième cas se présente lorsque la consigne de puissance globale est égale ou supérieure au MPP global, courant, de la centrale (en cherchant donc à libérer toute la puissance disponible, comme illustré précédemment sur la figure 4B aux instants 90s, 400s, et 590s).

Dans cet exemple, un balayage cyclique d'un onduleur parmi trois onduleurs est présenté. D'autres stratégies de balayage sont possibles pour améliorer l'estimation du MPP ou disposer à tout instant du maximum de puissance pilotable. Certaines de ces stratégies peuvent se baser par exemple sur la mesure de la tension continue (DC) aux bornes des panneaux. En outre, dans le cas de deux onduleurs seulement par exemple (ou respectivement de quatre onduleurs), un onduleur (respectivement deux) peut (peuvent) être placé(s) à son (leur) MPP, tandis que l'autre (les deux autres) suit (suivent) une consigne de puissance imposée. En outre, chaque onduleur peut avoir son MPP propre, différent du MPP d'un autre onduleur (en raison du nombre de panneaux auquel il est relié, ou de leur dégradation propre).

La figure 5 illustre l'algorithme correspondant à un détail de réalisation intégrant la première étape d'initialisation S1, présentée ci-avant. Pendant une durée $T_{init}$, les onduleurs sont tous commandés au MPP. Le temps $T_{init}$ doit être suffisamment long pour que les MPP se stabilisent (temps nécessaire pour que l'algorithme interne MPPT de chaque onduleur converge). Cette valeur dépend du modèle d'onduleur et des indications du constructeur, mais est de l'ordre de 10-20 secondes pour un onduleur du commerce aujourd'hui. Aucune réserve n'est assurée pendant cette phase. Au début de l'initialisation (t = $t_0$), on définit la première valeur de la variable $t_{fin\_cycle}$. Ainsi, l'initialisation se termine dès que le temps d'initialisation est écoulé, et le réglage de fréquence peut commencer réellement aux étapes suivantes. Auparavant, les valeurs estimées des MPP de chaque onduleur sont stockées dans la mémoire du dispositif de contrôle DIS.

Ces valeurs sont mises à jour à l'étape S3 dès que chaque « phase » du cycle est terminée (flèche OK en sortie du test S2), et qu'un certain nombre k d'onduleurs ont été commandés au MPP pour obtenir une valeur mise à jour de leurs MPP. Le schéma de principe pour cette étape S3 de mise à jour des estimations de MPP est présenté sur la figure 6 commentée ci-après, pour un nombre N d'onduleurs. À l'étape S31 de la figure 6, il est procédé à une initialisation d'un compteur d'onduleur i (i=0). Au test S32, tant que le compteur i est inférieur au nombre total d'onduleurs N (flèche OK), il peut être procédé à une mise à jour des valeurs de MPP stockées avec des mesures obtenues dans le dernier cycle effectué. Si le compteur i a atteint la valeur N (flèche KO), alors, à l'étape S33, cette routine de mise à jour des MPP peut s'arrêter. Sinon, à l'étape S34, le compteur i est d'abord incrémenté (pour désigner un onduleur suivant), puis à l'étape S35, il est effectué un test pour déterminer si cet onduleur i est actuellement placé à son MPP, auquel cas (flèche OK-S35) la puissance de sortie mesuré sur cet onduleur Pmes(i) correspond à son MPP estimé (MPPest(i)) et peut être stockée en mémoire à l'étape S36. Sinon (flèche KO-S35), le MPP estimé de l'onduleur courant i reste inchangé, tel qu'il est couramment stocké dans la mémoire du dispositif DIS (étape S37).

En revenant à la figure 5, à l'étape S4 (qui suit l'étape S3 de mise à jour des MPP), les paramètres de cycle sont réinitialisés pour préparer la prochaine phase du cycle. Les Jetons sont également redistribués pour indiquer les prochains onduleurs à placer à leur MPP. La valeur précédente des jetons est gardée en mémoire pour déterminer les onduleurs placés au MPP à la phase précédente du cycle. On procède ainsi à cette étape S4, à :

- une redistribution des Jetons : l'état des jetons à la phase précédente ayant été enregistré et gardé en mémoire, les jetons sont redistribués par permutation circulaire (par exemple, pour une centrale à quatre onduleurs avec deux jetons et deux onduleurs au MPP à la fois, on aurait 1001 qui devient 1100 si le bit 1 définit un onduleur à placer au MPP) ; et
- après la définition des nouveaux Jetons, les nouvelles pentes sont calculées pour les rampes de lissage des transitions de puissance (calcul des nouveaux paramètres de rampe). Ce calcul est détaillé plus loin.

A l'étape S5, on redéfinit les variables de temps définissant la fin de phase des rampes et la fin de phase de mise à jour des MPP des onduleurs, comme suit :

   o

$$t_{fin\_rampe} = t + T_{rampe}$$

o

$$t_{fin\_cycle} = t + T_{cycle}$$

En particulier, il s'agit de déterminer un instant quand une rampe de lissage de puissance peut être terminée et un instant où la mise à jour du MPP peut être considérée comme terminée.

Bien entendu, la distribution cyclique des Jetons, présentée ici, n'est qu'un exemple de réalisation qui peut être utilisée pour le pilotage des onduleurs au MPP. Il existe d'autres réalisations possibles pour redistribuer les Jetons.

Par ailleurs, tant qu'un cycle n'est pas terminé (flèche KO en sortie du test S2), les paramètres de cycle et les MPP estimés restent inchangés (étape S6).

A l'étape S7, le MPP global de la centrale est estimé en effectuant la somme des estimations des MPP individuels de l'ensemble des N onduleurs de la centrale :

$$MPP_{global\_est} = \sum_{onduleurs} MPP_{est}(i)$$

Ensuite, au test S8, cette valeur $MPP_{global\_est}$ est comparée à un seuil THR d'activation de la procédure de réserve selon l'invention (indépendamment de l'équilibre en fréquence du réseau). Si la puissance maximale $MPP_{global\_est}$ est inférieure à ce seuil THR (flèche KO en sortie du test S8), alors tous les onduleurs sont simplement forcés de fonctionner au MPP à l'étape S9.

Sinon (flèche OK en sortie du test S8), on calcule une consigne globale de puissance P(f) qui peut être inférieure au maximum $MPP_{global\_est}$ et dépendre de la fréquence du réseau f, à l'étape S10.

A titre d'exemple de calcul de P(f) pour un réglage primaire de la fréquence, la consigne globale est calculée à partir de la puissance totale disponible (estimation du MPP global), de la quantité de réserve « moyenne » souhaitée ($R_0$) et de la mesure de fréquence du réseau, pour effectuer un réglage primaire de la fréquence, comme suit :

$$Pcons_{total} = MPP_{global\_est} - R_0 - H(f - f_0) \text{ (avec } R_0 \text{ et } H \text{ supérieurs à 0).}$$

A ce calcul, se rajoute une saturation pour respecter préférentiellement les bornes ci-dessous :

$$MPP_{est\_total} - 2R_0 \leq Pcons_{total} \leq MPP_{global\_est}$$

Une telle réalisation permet de faire en sorte que la puissance qui peut effectivement être produite au maximum par la centrale ne puisse être inférieure à la consigne de puissance donnée (situation de la figure 4B à 90s, 400s, etc.) et conserver ainsi une cohérence entre la consigne de puissance et la puissance effectivement produite. Ainsi, le réglage de la valeur de $H$ définit l'énergie « normée » de la centrale pour le réglage de fréquence. La consigne de puissance globale peut augmenter pour répondre efficacement à une baisse de la fréquence et diminuer pour répondre à une hausse de la fréquence.

Bien entendu, il ne s'agit que d'un exemple simple pour du réglage de fréquence avec un gain proportionnel. D'autres réalisations pour le réglage de fréquence sont possibles, par exemple avec des pentes variables et/ou l'ajout de bande morte. La consigne globale peut également être calculée en fonction d'un signal externe provenant par exemple d'une entité gestionnaire du réseau demandant de libérer plus ou moins de réserve à chaque instant.

Tant que la consigne de puissance globale reste inférieure au maximum possible de production $MPP_{global\_est}$ (flèche OK en sortie du test S11), les consignes individuelles de puissance CONS(i) sont calculées et envoyées aux onduleurs, comme suit, à l'étape S12, avec ici préférentiellement une recherche de répartition de puissance de la consigne hors MPP. Sinon (flèche KO en sortie du test S11), tous les onduleurs sont forcés de fonctionner au MPP à l'étape S13.

A l'étape S12 (détaillée plus loin en référence à la figure 7), les puissances individuelles sont calculées afin que la puissance globale effectivement délivrée soit égale à la consigne de puissance globale. Elles sont également calculées afin que les onduleurs qui passent d'une consigne bridée au MPP puissent monter progressivement au MPP (en respectant une rampe de lissage pour les transitions de puissance), et pour que les onduleurs qui « descendent » de leur MPP puissent également descendre progressivement pour éviter des sauts de puissance. Cette réalisation permet de lisser les transitions de puissance. Cette fonctionnalité est détaillée ci-après.

Pour éviter les transitions brutales de puissances individuelles dues aux sauts de consigne (passage d'une puissance bridée au MPP et inversement), une rampe est ajoutée aux consignes de puissance pour « adoucir » ces transitions. En effet, il a été observé, notamment pour certains onduleurs, une croissance de puissance pour atteindre le MPP qui peut être plus rapide qu'une décroissance de puissance depuis le MPP. Il est possible, pour d'autres modèles d'onduleurs que cette tendance soit inverse. En tout état de cause, cette différence de vitesse de variation pour atteindre le MPP génère des pics de puissance globale produite par rapport à la consigne, qu'il convient alors d'atténuer. On peut observer l'effet de telles rampes sur les puissances individuelles produites dans l'exemple de la figure 4B (pour les puissances Pp1, Pp2 et Pp3). L'objectif des rampes est que la puissance globale soit toujours respectée mais que les transitions de puissance au niveau des onduleurs individuels soient plus « douces », en respectant que la somme des consignes égale toujours la consigne globale.

Dans un exemple de réalisation, la pente de chaque onduleur est calculée de la manière suivante :

$$P\_rampe(i) = \frac{\Delta P(i)}{T\_rampe}$$

$\Delta P(i)$ est la différence entre le MPP de l'onduleur(i) et sa puissance à l'instant qui précède le début de la rampe. En pratique, il est calculé en utilisant l'estimation du MPP de l'onduleur (dernière valeur gardée en mémoire) et la dernière consigne de puissance envoyée à l'onduleur. Ce calcul se fait à l'étape S4 présentée précédemment en référence à la figure 5.

Pour un ensemble d'onduleurs (avec possiblement plusieurs onduleurs qui montent au MPP en même temps que plusieurs onduleurs descendent du MPP), chaque onduleur qui monte au MPP reçoit une consigne en rampe avant d'atteindre son MPP, et les onduleurs qui descendent reçoivent une consigne qui diminue progressivement du MPP vers une consigne bridée en vue de la réserve. A chaque instant les consignes sont calculées afin de respecter la puissance globale de la centrale.

On définit également la consigne de rampe totale : $P\_rampe\_tot = \sum_{\substack{onduleurs \\ montants}} P\_rampe(i)$

A l'instant $t$, si l'onduleur $i$ est en train de monter en puissance vers son MPP, sa nouvelle consigne est donnée par la relation :

$$(\textbf{R1}) : Pcons(i)(t) = MPP_{est}(i) - \left(t_{fin\_rampe} - t - t_{ech}\right) * P\_rampe(i)$$

où $t_{ech}$ est le temps d'échantillonnage. Cette formule est valable indépendamment du temps d'échantillonnage de l'algorithme. La réserve de puissance est assurée par les onduleurs qui ne sont pas au MPP. Ils reçoivent chacun une consigne, proportionnelle à leur puissance de MPP, calculée afin que la somme des puissances produites par les onduleurs respecte la consigne globale.

Pour un onduleur qui n'est pas au MPP, sa consigne de puissance est donnée par la relation suivante :

$$(\textbf{R2}) : Pcons(j) = \frac{Pcons\_globale - \sum_{\substack{onduleurs \\ au\ MPP}} MPP_{est}(i)}{MPP_{est\_total} - \sum_{\substack{onduleurs \\ au\ MPP}} MPP_{est}(i)} * MPP_{est}(j)$$

Les valeurs estimées des MPP (gardées en mémoire) sont utilisées pour calculer les consignes. Ainsi, avec l'hypothèse que les consignes de puissance soient bien réalisées, la somme des puissances individuelles donne bien la consigne de puissance globale.

Par ailleurs, afin de compenser la rampe de puissance des onduleurs qui montent au MPP, la consigne des onduleurs qui « descendent » doit être adaptée, afin qu'à chaque instant la somme des consignes individuelles donne bien la consigne globale. Ainsi, à l'instant $t$, si l'onduleur $i$ est en train de descendre de son MPP en vue de respecter la réserve, sa nouvelle consigne est donnée par la relation :

**(R3) :**
$$Pcons(j)(t) =$$

$$\frac{Pcons\_globale - \sum_{\substack{onduleurs \\ au\ MPP}} MPP_{est}(i)}{MPP_{est\_total} - \sum_{\substack{onduleurs \\ au\ MPP}} MPP_{est}(i)} * MPP_{est}(j) - \frac{(t_{fin\_rampe} - t - t_{ech}) * P\_rampe\_tot}{\substack{Nombre\ d'onduleurs \\ qui\ descendent\ du\ MPP}}$$

où $t_{ech}$ est un temps d'échantillonnage donné.

En utilisant ces relations et en sommant les consignes :

- des onduleurs qui sont au MPP,
- des onduleurs qui participent à la réalisation de la réserve,
- des onduleurs qui montent au MPP, et
- des onduleurs qui descendent du MPP,

on retrouve bien que la somme des consignes est égale à la consigne globale à l'instant *t*.

On a illustré sur la figure 7 un ordinogramme d'algorithme correspondant à ce traitement imposant les rampes précitées. Après une étape S131 d'initialisation d'un compteur d'onduleurs i (i=0), un test S132 de comparaison au nombre N (avec si i=N la fin de cette routine à l'étape S133) et une incrémentation de i à l'étape S134, on détermine tout d'abord si le jeton de l'onduleur i vaut 1 (cet onduleur doit être amené à son MPP) au test S135. On détermine en outre si le jeton précédent JET-1(i) de cet onduleur (au cycle précédent) était déjà à 1 aux tests S136 et S137. On détermine en outre si le temps courant a dépassé une temporisation choisie t$_{rampe}$ aux tests S138 et S139.

Si le jeton courant de l'onduleur i vaut 1, et si le jeton précédent de l'onduleur i valait 1 aussi, alors il n'est pas nécessaire d'effectuer une variation de puissance à produire par cet onduleur i et à l'étape S140, sa consigne de puissance Pcons(i) correspond à son MPP.

Si le jeton courant de l'onduleur i vaut 1 mais si en outre le jeton précédent de l'onduleur i valait 0, tandis que la temporisation t$_{rampe}$ n'est pas encore écoulée, alors à l'étape S141, on pilote l'onduleur i pour respecter la rampe de montée à son MPP avec sa consigne de puissance Pcons(i) calculée selon la relation R1. Dans ce cas toutefois, une fois la temporisation t$_{rampe}$ terminée, on applique l'étape S140 en imposant à l'onduleur i d'atteindre son MPP.

Si le jeton courant de l'onduleur i vaut 0 alors que le jeton précédent de l'onduleur i valait 1, alors il convient de « descendre » l'onduleur i de son MPP et une temporisation est appliquée jusqu'à t$_{rampe}$. Pendant cette temporisation, la consigne de puissance Pcons(i) de cet onduleur i est déterminée par la relation R3 donnée précédemment et qui dépend de la rampe imposée, à l'étape S142. Ensuite, une fois la temporisation terminée, la consigne de puissance ne dépend plus de la rampe imposée et est déterminée par la relation R2.

Si le jeton courant de l'onduleur i vaut 0 et si le jeton précédent de l'onduleur i valait 0 aussi, alors à l'étape S143, sa consigne de puissance Pcons(i) reste inférieure au MPP et est déterminée par la relation R2 donnée précédemment.

Par la mise en œuvre d'invention, une ferme photovoltaïque composée de plusieurs onduleurs peut participer au soutien dynamique de la fréquence sans ajout de stockage, ni capteurs supplémentaires, et sans modification des contrôleurs internes des onduleurs photovoltaïques disponibles actuellement dans le commerce.

L'algorithme d'estimation cyclique des MPP des onduleurs permet d'estimer dynamiquement le MPP global de la centrale, et suivre les variations de MPP, tout en produisant une puissance globale inférieure au MPP de la centrale, et ainsi maintenir précisément un volume de réserve (en particulier si la dynamique de variation d'ensoleillement reste lente). Un tel résultat est atteint sans modèle de connaissance, ni capteur, ni modification des contrôleurs internes des onduleurs PV disponibles dans le commerce. La connaissance du MPP à tout instant permet au gestionnaire du réseau de distribution d'électricité de connaitre le volume de réserve disponible pour répondre au besoin de distribution. Un moyen informatique simple (automate ou ordinateur pour exécuter l'algorithme) comprenant des bus de communication adaptés (pour communiquer avec les onduleurs, comme l'interface INT de la figure 2) permet la mise en œuvre de l'invention sur des fermes photovoltaïques existantes, les onduleurs ayant déjà la capacité de recevoir des consignes de puissance active et renvoyer leurs mesures de puissance actives. Ainsi, certaines centrales photovoltaïques existantes (disposant d'onduleurs capables de recevoir des consignes d'un dispositif extérieur) peuvent être facilement adaptées pour effectuer du réglage de fréquence sans modification des onduleurs ni des panneaux photovoltaïques. Le procédé de l'invention peut s'adapter facilement pour fonctionner avec un nombre quelconque d'onduleurs (supérieur à deux), et pour fonctionner avec des onduleurs ayant différentes caractéristiques dynamiques, différentes puissances (moyennant un simple réglage des paramètres de l'algorithme). L'algorithme peut être utilisé pour la mise en œuvre d'autres services nécessitant un pilotage de la production photovoltaïque (autre que la contribution à l'équilibre de la fréquence du réseau).

**Revendications**

1.  Procédé, mis en œuvre par des moyens informatiques (DIS), de contrôle de la puissance électrique produite par une installation de panneaux photovoltaïques (PV1, PV2, ..., PVN) pour constituer une réserve de puissance, l'installation comportant un ensemble de N onduleurs (OND1, OND2,..., ONDN) pour piloter la puissance produite (Pp1, Pp2,..., PpN) par lesdits panneaux photovoltaïques, le procédé, mené itérativement sur des onduleurs successifs parmi l'ensemble des N onduleurs, comprenant :

    - Emettre des consignes (CONS1, CONS2, ...,CONSN) respectives à un nombre k d'onduleurs parmi l'ensemble des N onduleurs, pour produire chacun une puissance maximale (a), le nombre k étant inférieur au nombre N et les k onduleurs étant déterminés pour une itération donnée du procédé,
    - Obtenir des k onduleurs des mesures de puissances maximales (MES1, MES2, ..., MESN) produites respectivement par les k onduleurs et enregistrer en mémoire lesdites mesures pour les k onduleurs (c), ladite mémoire stockant en outre N-k mesures obtenues de N-k onduleurs complémentaires lors d'au moins une itération précédente du procédé,
    - Estimer, par lecture du contenu de la mémoire (MEM), une puissance maximale totale susceptible d'être produite par l'ensemble des N onduleurs de l'installation (d),
    - Obtenir une information relative à une quantité de puissance de réserve à constituer, et déterminer une puissance globale à produire de sorte que l'écart entre ladite puissance globale et ladite puissance maximale totale corresponde à ladite quantité de puissance de réserve à constituer (e),
    - Maintenir les consignes des k onduleurs de produire une puissance maximale, et émettre des consignes respectivement à N-k onduleurs complémentaires pour produire une puissance cible inférieure à une puissance maximale, afin que la somme des N-k puissances cibles et des k puissances maximales corresponde à ladite puissance globale à produire (f),
    - Choisir parmi les N onduleurs un ou plusieurs onduleurs suivants pour remplacer les k onduleurs dans une itération suivante du procédé.

2.  Procédé selon la revendication 1, dans lequel une temporisation (b) est appliquée entre l'émission des consignes aux k onduleurs et l'obtention des mesures de puissances maximales des k onduleurs, pour tenir compte d'une latence de recherche par chaque onduleur du maximum de puissance pouvant être produite.

3.  Procédé selon l'une des revendications précédentes, dans lequel chaque consigne aux k onduleurs d'atteindre la puissance maximale comporte une consigne de rampe temporelle à respecter, pour une augmentation progressive de la puissance produite par chacun des k onduleurs.

4.  Procédé selon l'une des revendications précédentes, dans lequel, avant l'émission d'une consigne de puissance cible à un onduleur donné, il est vérifié si ledit onduleur donné a reçu une consigne de production de puissance maximale à l'itération précédente du procédé, et le cas échéant la consigne de puissance cible à cet onduleur donné comporte une consigne de rampe temporelle à respecter pour une diminution progressive de la puissance produite par cet onduleur donné jusqu'à la puissance cible.

5.  Procédé selon la revendication 4, prise en combinaison avec la revendication 3, dans lequel les rampes d'augmentation et de diminution sont choisies pour conserver sur l'ensemble des N onduleurs une puissance globale produite correspondant à ladite puissance globale à produire.

6.  Procédé selon l'une des revendications précédentes, dans lequel chaque consigne de puissance cible est déterminée pour respecter un même écart entre la puissance cible et la puissance maximale pour tous les N-k onduleurs complémentaires.

7.  Procédé selon l'une des revendications précédentes, dans lequel ladite réserve de puissance de l'installation est constituée en vue de libérer toute ou partie de ladite réserve en fonction d'une déviation de fréquence ($\Delta f$) par rapport à une fréquence nominale d'un réseau de distribution d'électricité auquel les onduleurs sont connectés.

8.  Procédé selon la revendication 7, dans lequel ladite information relative à une quantité de puissance de réserve à constituer est une valeur mesurée de la fréquence du réseau de distribution, en fonction de laquelle est calculée ladite quantité de puissance de réserve à constituer.

9.  Procédé selon la revendication 7, dans lequel ladite information relative à une quantité de puissance de réserve à constituer est une consigne de constitution de réserve reçue d'une entité gestionnaire du réseau de distribution.

10. Procédé selon l'une des revendications précédentes, dans lequel, dans une itération suivante du procédé, on choisit, parmi les N onduleurs, k onduleurs suivants pour remplacer k onduleurs précédents d'une itération précédente, en effectuant une permutation cyclique de k onduleurs à chaque itération.

11. Programme informatique **caractérisé en ce qu'**il comporte des instructions pour la mise en œuvre du procédé selon l'une des revendications 1 à 10, lorsque ce programme est exécuté par un processeur.

12. Dispositif informatique (DIS) comportant un circuit de traitement comprenant un processeur pour la mise en œuvre du procédé selon l'une des revendications 1 à 10, le circuit de traitement incluant en outre au moins :

- une interface de communication (INT) avec les onduleurs, et
- une mémoire (STO) d'enregistrement des mesures de puissances maximales produites successivement par les onduleurs.

**Patentansprüche**

1. Verfahren, implementiert durch Datenverarbeitungsmittel (DIS), zur Steuerung/Regelung der elektrischen Leistung, die durch eine Installation von Photovoltaikmodulen (PV1, PV2, ...PVN) erzeugt wird, um eine Leistungsreserve zu bilden, wobei die Installation einen Satz von N Wechselrichtern (OND1, OND2, ..., ONDN) zum Steuern der von den Photovoltaikmodulen erzeugten Leistung (Pp1, Pp2, ..., PpN) umfasst, wobei das Verfahren, das iterativ an aufeinanderfolgenden Wechselrichtern aus dem Satz von N Wechselrichtern durchgeführt wird, umfasst:

- Ausgeben entsprechender Anweisungen (CONS1, CONS2, ..., CONSN) an eine Anzahl k von Wechselrichtern aus dem Satz von N Wechselrichtern, um jeweils eine maximale Leistung zu erzeugen (a), wobei die Anzahl k kleiner als die Anzahl N ist und die k Wechselrichter für eine gegebene Iteration des Verfahrens bestimmt werden,
- Erhalten von Messungen maximaler Leistungen (MES1, MES2, ..., MESN), die jeweils von den k Wechselrichtern erzeugt werden, von den k Wechselrichtern, und Aufzeichnen der Messungen für die k Wechselrichter im Speicher (c), wobei der Speicher auch N-k Messungen speichert, die von N-k komplementären Wechselrichtern während wenigstens einer vorherigen Iteration des Verfahrens erhalten wurden,
- Schätzen einer maximalen Totalleistung, die von dem Satz der N Wechselrichter der Installation erzeugt werden kann (d), durch Auslesen des Inhalts des Speichers (MEM).
- Einholen einer Information in Bezug auf eine zu bildende Reserveleistungsmenge und Bestimmen einer zu erzeugenden Gesamtleistung, so dass die Differenz zwischen der Gesamtleistung und der maximalen Totalleistung der zu bildenden Reserveleistungsmenge entspricht (e),
- Beibehalten der Anweisungen für die k Wechselrichter, eine maximale Leistung zu erzeugen, und jeweils Ausgeben von Anweisungen an N-k komplementäre Wechselrichter, um eine Zielleistung zu erzeugen, die niedriger als eine maximale Leistung ist, so dass die Summe der N-k Zielleistungen und der k maximalen Leistungen der zu erzeugenden Gesamtleistung entspricht (f),
- Auswählen von einem oder mehreren folgenden Wechselrichtern aus den N Wechselrichtern, um die k Wechselrichter in einer folgenden Iteration des Verfahrens zu ersetzen.

2. Verfahren nach Anspruch 1, wobei eine Zeitverzögerung (b) zwischen der Ausgabe der Anweisungen an die k Wechselrichter und dem Erhalt der Messungen der maximalen Leistungen der k Wechselrichter implementiert wird, um für jeden Wechselrichter eine Latenz der Suche nach dem Maximum der erzeugbaren Leistung zu berücksichtigen.

3. Verfahren nach einem der vorhergehenden Ansprüche, wobei jede Anweisung an die k Wechselrichter zum Erreichen der maximalen Leistung eine Anweisung für eine zu beachtende Zeitrampe umfasst, für eine fortschreitende Erhöhung der von jedem der k Wechselrichter erzeugten Leistung.

4. Verfahren nach einem der vorhergehenden Ansprüche, wobei vor der Ausgabe einer Anweisung für eine Zielleistung an einen gegebenen Wechselrichter geprüft wird, ob der gegebene Wechselrichter bei der vorherigen Iteration des Verfahrens eine Anweisung zur Erzeugung einer maximalen Leistung erhalten hat, und wobei gegebenenfalls die Anweisung für die Zielleistung für diesen gegebenen Wechselrichter eine Anweisung für eine zu beachtende Zeitrampe für eine fortschreitende Verringerung der von diesem gegebenen Wechselrichter erzeugten Leistung bis zur Zielleistung umfasst.

5. Verfahren nach Anspruch 4 in Kombination mit Anspruch 3, wobei die Rampen zur Erhöhung und Verringerung gewählt werden, um an dem Satz von N Wechselrichtern eine Gesamtleistung beizubehalten, die entsprechend der zu erzeugenden Gesamtleistung erzeugt wird.

6. Verfahren gemäß einem der vorhergehenden Ansprüche, wobei jede Anweisung für eine Zielleistung bestimmt wird, um eine gleiche Differenz zwischen der Zielleistung und der maximalen Leistung für alle N-k komplementären Wechselrichter zu beachten.

7. Verfahren nach einem der vorhergehenden Ansprüche, wobei die Leistungsreserve der Installation gebildet wird, um die gesamte Reserve oder einen Teil davon freizugeben, in Abhängigkeit von einer Frequenzabweichung ($\Delta f$) in Bezug auf eine nominale Frequenz eines Stromverteilungsnetzes, an das die Wechselrichter angeschlossen sind.

8. Verfahren nach Anspruch 7, wobei die Information, die sich auf eine Menge der zu bildenden Reserveleistung bezieht, ein gemessener Wert der Frequenz des Verteilungsnetzes ist, in Abhängigkeit von dem die Menge der zu bildenden Reserveleistung berechnet wird.

9. Verfahren nach Anspruch 7, wobei die Information, die sich auf eine Menge der zu bildenden Reserveleistung bezieht, eine Anweisung zur Reservebildung ist, die von einer das Verteilungsnetz verwaltenden Stelle erhalten wurde.

10. Verfahren nach einem der vorhergehenden Ansprüche, wobei in einer folgenden Iteration des Verfahrens aus den N Wechselrichtern k folgende Wechselrichter ausgewählt werden, um k vorherige Wechselrichter einer vorherigen Iteration zu ersetzen, indem bei jeder Iteration eine zyklische Permutation von k Wechselrichtern durchgeführt wird.

11. Computerprogramm, **dadurch gekennzeichnet, dass** es Anweisungen umfasst, um das Verfahren gemäß einem der Ansprüche 1 bis 10 durchzuführen, wenn dieses Programm von einem Prozessor ausgeführt wird.

12. Datenverarbeitungseinrichtung (DIS) mit einer Verarbeitungsschaltung, umfassend einen Prozessor zum Durchführen des Verfahrens nach einem der Ansprüche 1 bis 10, wobei die Verarbeitungsschaltung ferner wenigstens umfasst:

- eine Schnittstelle (INT) zur Kommunikation mit den Wechselrichtern und
- einen Speicher (STO) zur Aufzeichnung der Messungen von maximalen Leistungen, die von den Wechselrichtern nacheinander erzeugt werden.

## Claims

1. Method, implemented by computer means (DIS), for controlling the electric power produced by a facility of photovoltaic panels (PV1, PV2, ..., PVN) in order to establish a power reserve, the facility comprising a set of N inverters (OND1, OND2, ..., ONDN) for managing the power produced (Pp1, Pp2, ..., PpN) by said photovoltaic panels, the method, carried out iteratively on successive inverters among the set of N inverters, comprising:

- issuing respective setpoints (CONS1, CONS2, ..., CONSN) to a number k of inverters among the set of N inverters, so that each produces a maximum power (a), the number k being less than the number N and the k inverters being determined for a given iteration of the method,
- obtaining, from the k inverters, measurements of the maximum power (MES1, MES2, ..., MESN) respectively produced by the k inverters and storing in memory said measurements for the k inverters (c), said memory also storing N-k measurements obtained from N-k additional inverters during at least one prior iteration of the method,
- estimating, by reading the contents of the memory (MEM), a total maximum power able to be produced by the set of N inverters of the facility (d),
- obtaining information relating to an amount of reserve power to be established, and determining an overall power to be produced such that the difference between said overall power and said total maximum power corresponds to said amount of reserve power to be established (e),
- maintaining the setpoints of the k inverters so as to produce a maximum power, and issuing setpoints respectively to N-k additional inverters in order to produce a target power that is less than the maximum power, so that the sum of the N-k target powers and of the k maximum powers corresponds to said overall power to be produced (f),

- selecting from the N inverters one or more next inverters to replace the k inverters in a next iteration of the method.

2. Method according to claim 1, wherein a delay (b) is applied between the issuing of the setpoints to the k inverters and the obtaining of the maximum power measurements of the k inverters, in order to take into account a latency in the search by each inverter for the maximum power that can be produced.

3. Method according to one of the preceding claims, wherein each setpoint issued to the k inverters for reaching the maximum power comprises a time ramp setpoint to be respected, in order to have a gradual increase in the power produced by each of the k inverters.

4. Method according to one of the preceding claims, wherein, before issuing a target power setpoint to a given inverter, it is verified that said given inverter has received a maximum power production setpoint in the previous iteration of the method, and where appropriate the target power setpoint for this given inverter comprises a time ramp setpoint to be respected in order to have a gradual decrease in the power produced by this given inverter until the target power is reached.

5. Method according to claim 4, taken in combination with claim 3, wherein the upward and downward ramps are chosen so as to maintain, across the set of N inverters, an overall produced power corresponding to said overall power to be produced.

6. Method according to one of the preceding claims, wherein each target power setpoint is determined so as to keep the same difference between the target power and the maximum power for all N-k additional inverters.

7. Method according to one of the preceding claims, wherein said power reserve of the facility is established in order to release all or part of said reserve as a function of a frequency deviation ($\Delta f$) from a nominal frequency of an electricity distribution network to which the inverters are connected.

8. Method according to claim 7, wherein said information relating to an amount of reserve power to be established is a measured value of the frequency of the distribution network, said amount of reserve power to be established being calculated on this basis.

9. Method according to claim 7, wherein said information relating to an amount of reserve power to be established is a reserve-establishment setpoint received from a managing entity of the distribution network.

10. Method according to one of the preceding claims, wherein, in a next iteration of the method, k next inverters are selected from the N inverters in order to replace k previous inverters of a previous iteration, performing a cyclic permutation of k inverters at each iteration.

11. Computer program **characterized in that** it comprises instructions for implementing the method according to one of claims 1 to 10, when the program is executed by a processor.

12. Computing device (DIS) having a processing circuit comprising a processor for implementing the method according to one of claims 1 to 10, the processing circuit further including at least:

- an interface (INT) for communicating with the inverters, and
- a memory (STO) for storing measurements of maximum powers successively produced by the inverters.

FIG. 1

FIG. 2

K $\longrightarrow$ MPP — a)

TEMPO — b)

P$_{MPP}$ $\longrightarrow$ STO — c)

MPP global — d)

$\Delta f$ $\longrightarrow$ CONS glob — e)

CONS $\longrightarrow$ N-k — f)

UPD $\longrightarrow$ k — g)

# FIG. 3

FIG. 4A

FIG. 4B

FIG. 5

i = 0 — S31

i < N ? — S32

KO

END — S33

OK

S34 — i = i + 1

S35

MPP ?

OK

KO

S36 — $MPP_{est}(i) = P_{mes}(i)$

MPP — S37

FIG. 6

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1559128

- EP 2490312 A1